# EUROPEAN PATENT SPECIFICATION

(11) **EP 0 602 288 B1**
(45) Date of publication and mention of the grant of the patent: **05.03.1997**
(21) Application number: 92204029.0
(22) Date of filing: 18.12.1992
(51) Int. Cl.: B01J 8/12, C10G 45/18

(54) **Moving catalyst bed reactor**
Katalytischer Wanderbettreaktor
Réacteur à lit catalytique mobile

(43) Date of publication of application: 22.06.1994
(73) Proprietor: SHELL INTERNATIONALE RESEARCH MAATSCHAPPIJ B.V., 2596 HR Den Haag (NL)
(72) Inventor: Deelen, Willem Johannes, NL-2596 HR The Hague (NL); Van der Els, Augustinus Cornelis Carolus, NL-2596 HR The Hague (NL); Den Hartog, Arie Pieter, NL-2596 HR The Hague (NL); Hermans, Godefriedus Antonius Marie, NL-1031 CM Amsterdam (NL); Hölscher, Hugo, NL-1031 CM Amsterdam (NL)

(56) References cited:
- EP-A- 0 068 558
- US-A- 4 357 304

## Description

The present invention relates to a moving catalyst bed reactor comprising a normally vertical cylindrical vessel provided at its upper end with a catalyst inlet and a reactant inlet and at its lower end with a catalyst outlet and an effluent outlet, and with a separation device arranged in the vessel near its lower end.

Such a reactor is described in USA patent specification No. 4 357 304. The separation device in the known moving catalyst bed reactor comprises a downwardly tapering catalyst support having an outer edge which is joined to the wall of the vessel and a central opening which communicates directly with the catalyst outlet. Above the catalyst support a separation device is arranged which comprises several parallel hollow partitions with screened side walls through which effluent can be withdrawn. The partitions extend along the width of the vessel. Between adjacent partitions catalyst passages are defined.

The moving catalyst bed reactor is suitably used for catalytically treating hydrocarbons, in particular catalytic desulphurization and demetallization of petroleum residues. In general these processes are carried out at elevated pressures and temperatures. The relatively long partitions of the separation device are subject to thermal stresses and are therefore easily damaged.

It is an object of the present invention to provide a moving catalyst bed reactor wherein the separation device is less adversely affected by thermal stresses.

To this end the moving catalyst bed reactor according to the present invention comprises a normally vertical cylindrical vessel provided at its upper end with a catalyst inlet and a reactant inlet and at its lower end with a catalyst outlet and an effluent outlet, and with a separation device arranged in the vessel near its lower end, the separation device comprises a downwardly tapering catalyst support having an outer edge which is joined to the wall of the vessel and a central opening which communicates directly with the catalyst outlet, the catalyst support is provided with perforations and with fluid withdrawal devices having means for preventing catalyst particles from passing while gas and/or liquid can pass, which fluid withdrawal devices are arranged over the perforations in radial directions and joined to the catalyst support.

It is a further advantage of the present invention that the fluid withdrawal devices are small and can thus easily be installed on the catalyst support.

The reactor of the present invention comprises a catalyst inlet and a reactant inlet. In certain situations, those inlets can be constituted by one and the same inlet means. The same is the case for the catalyst outlet and the effluent outlet.

The invention will now be described by way of example in more detail with reference to the accompanying drawings, wherein
Figure 1 shows schematically a side view of the moving catalyst bed reactor according to the invention;
Figure 2 shows schematically a cross-section of the lower part of the reactor as shown in Figure 1 drawn to a different scale; and
Figure 3 shows a cross-section of the reactor of Figure 2 along the line III-III.

The moving catalyst bed reactor 1 comprises a normally vertical cylindrical vessel 5, which vessel 5 is provided at its upper end with a catalyst inlet 7 and a reactant inlet 8, and at its lower end the vessel 5 is provided with a catalyst outlet 10 and an effluent outlet 12 communicating with an effluent collecting space 13 in the lower end of the vessel 5.

The vessel 5 is furthermore provided with a separation device 15 arranged in the vessel 5 near its lower end.

The separation device 15 comprises a downwardly tapering catalyst support 16, which catalyst support 16 has an outer edge 20 which is joined to the wall of the vessel 5 and a central opening 23 which communicates directly with the catalyst outlet 10 via conduit 25.

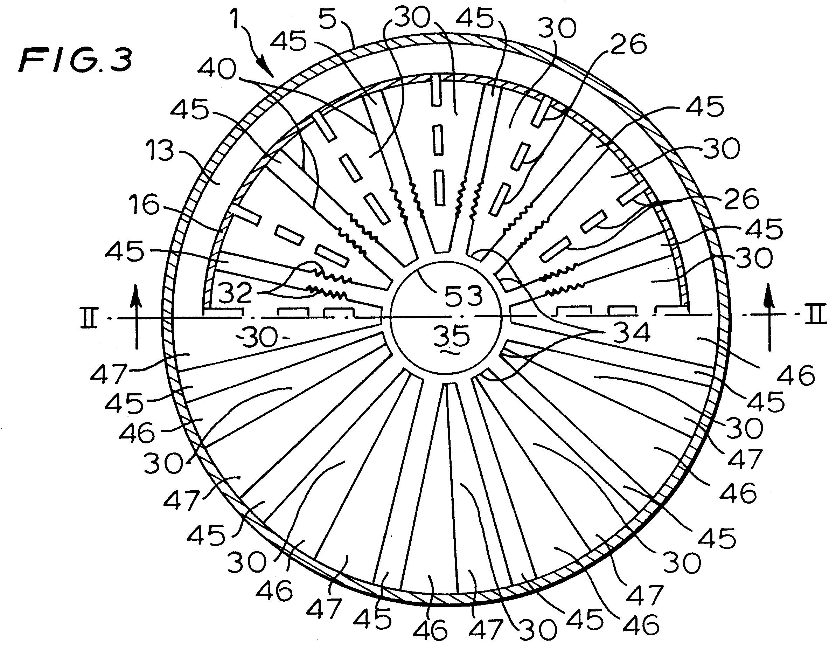

The catalyst support 16 is provided with perforations 26. The perforations 26 are situated along the intersections of vertical planes with the catalyst support 16. Please note that in Figure 3 for the sake of clarity not all perforations have been referred to by a reference numeral.

The catalyst support 16 is furthermore provided with fluid withdrawal devices 30 having means for preventing catalyst particles from passing in the form of screens 32, which fluid withdrawal devices 30 are arranged over the perforations 26 and joined to the catalyst support 16. Each fluid withdrawal device 30 is arranged over the perforations 26 along one intersection. The fluid withdrawal devices 30 protrude radially from the downwardly tapering catalyst support 16, and the end walls 34 of the fluid withdrawal devices 30 leave a central chamber 35 having a diameter which is not smaller than the diameter of the central opening 23 of the catalyst support 16.

Each fluid withdrawal device 30 has two vertical side walls 40 each being provided with the screen 32 and a top cover 41. In Figure 3 the zigzag lines represent the screens 32, and not all side walls and not all screens have been referred to by a reference numeral.

The vertical side walls 40 of adjacent fluid withdrawal devices 30 define catalyst passages 45 having a constant width.

The top cover 41 of a fluid withdrawal device 30 consists of two inclined walls 46 and 47 joined by a seam.

The separation device 15 further includes a conical cover 50 closing the upper end of the central chamber 35 and a tube 53 extending downwardly into the central chamber 35 to the lowermost parts of the screens 32. To facilitate simultaneous removal the tube 53 is secured to the conical cover 50. For the sake of clarity the clearance between the end walls 34 and the tube 35 has been exaggerated.

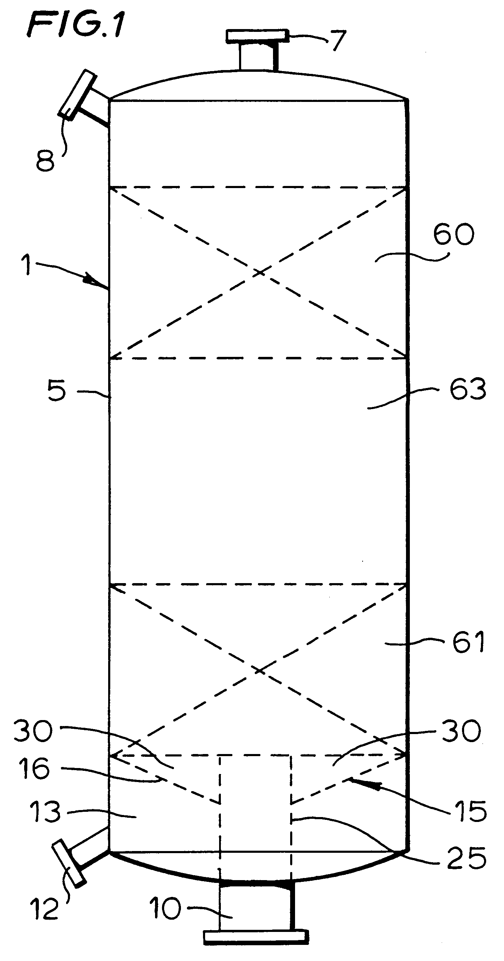

During normal operation, the reactor is filled with catalyst, arranged in one bed or in two or more beds, in Figure 1, two catalyst beds 60 and 61 are shown. Between the catalyst beds is arranged a redistribution device 63.

Reactant(s) is (are) supplied to the upper catalyst bed 60 through reactant inlet 8. In the upper catalyst bed 60 the reaction starts and product(s) is (are) formed from the reactant(s). The reactant(s) and the formed product(s) move downwardly through the upper catalyst bed 60, via the redistribution device 63 and through the lower catalyst bed 61, where the reaction continues. The effluent leaves the vessel 5 through the effluent outlet 12.

On the way to the effluent outlet 12, the effluent, comprising remaining reactant(s) and formed product(s), passes the separation device 15. At first the effluent flows into the catalyst passages 45 between adjacent fluid withdrawal devices 30, then through the screens 32 into the fluid withdrawal devices 30. The effluent leaves the fluid withdrawal devices 30 through the perforations 26 and enters into the effluent collecting space 13 from which it is withdrawn through the effluent outlet 12.

Some effluent will not be removed through the screens 32 and will be collected in the catalyst filled conduit 25, where uncontrolled reactions could occur so that a tough cake is formed. The prevent this such an amount of inert liquid is supplied through a supply conduit 70 opening into a catalyst passage 45 that the conduit 25 and the part of the conical catalyst support 16 up to the level of the lower edge of the screens 32 are filled with inert liquid. An advantage of the separation device 15 according to the present invention is that the volume of inert liquid is small, and a further advantage is that the interface between the inert liquid and the effluent is small. Therefore a better control of the interface is obtained and thus the chance that a cake is formed in the conduit 35 is reduced.

When it is required to add fresh catalyst, spent catalyst is removed from the reactor 1 through catalyst outlet 10 and an amount of fresh catalyst sufficient to compensate the withdrawn catalyst is supplied through catalyst inlet 7.

Spent catalyst flows through the catalyst passages 45, through the openings between adjacent fluid withdrawal devices 30 under the tube 53 and into the conduit 25.

An advantage of the separator 15 according to the present invention is that the fluid withdrawal devices are arranged in radial directions, and consequently the catalyst passages 45 are substantially perpendicular to the wall of the vessel 5 so that the flow of catalyst particles in the catalyst passages 45 is uniform and the flow in the edges of the catalyst passages 45 cannot be stagnant.

The top angle of the conical cover 50 and the inclination angles of the inclined walls 46 and 47 are so selected that uniform flow of catalyst particles from the lower catalyst bed 61 into the catalyst passages 45 is secured.

The number of fluid withdrawal devices is typically an even number between 10 and 20.

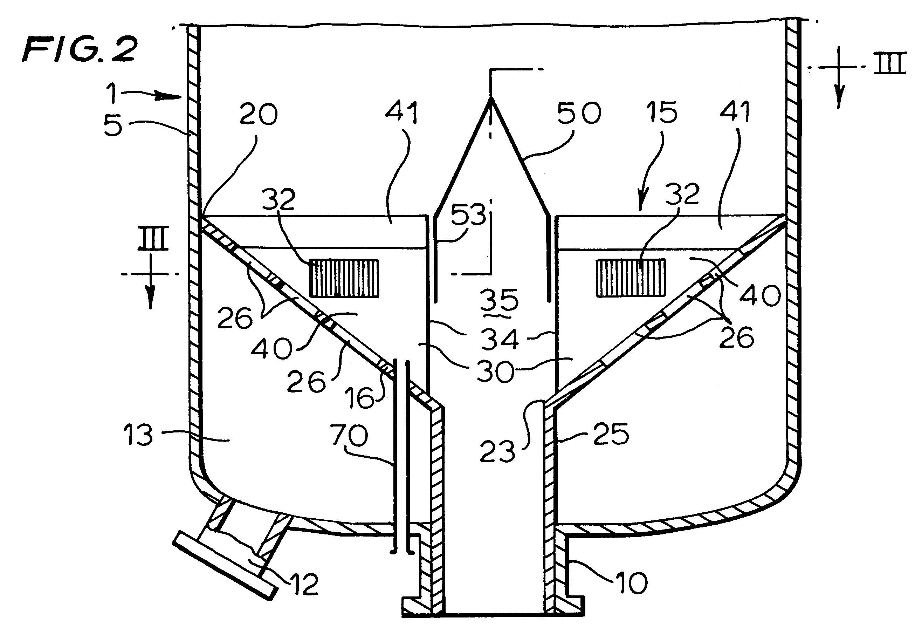

As shown in Figures 2 and 3 the perforations 26 are arranged in groups of three and over each group of three perforations a fluid withdrawal device is arranged. Instead of a group of three perforations the catalyst support can be provided with one elongated perforation or with several small perforations or openings. The center(s) of the perforation(s) can be situated on the intersection of a vertical plane with the catalyst support or in the neighbourhood of the intersection. In the specification and in the claims the expression "along the intersection" has been used to refer to these possibilities.

The catalyst support can consist of one section having a constant angle of cone or it can consist of two joined sections having different angles of cone.

Suitably the redistribution device 63 is the redistribution device as described in European patent specification publication No. 0,602,287, which has been filed on the same date.

Therefore, the present case further relates to a moving catalyst bed reactor according to the present invention, which reactor furthermore comprises a redistribution device comprising a distribution tray in the central chamber and distribution plates in the fluid exchange boxes arranged under the lower openings.

## Claims

1. A moving catalyst bed reactor (1) comprising a vertical cylindrical vessel (5) provided at its upper end with a catalyst inlet (7) and a reactant inlet (8) and at its lower end with a catalyst outlet (10) and an effluent outlet (12), and with a separation device (15) arranged in the vessel (5) near its lower end, which separation device (15) comprises a downwardly tapering catalyst support (16) having an outer edge (20) which is joined to the wall of the vessel (1) and a central opening (23) which communicates directly with the catalyst outlet (10), the catalyst support (16) is provided with perforations (26) and with fluid withdrawal devices (30) having means (32) for preventing catalyst particles from passing, while gas and/or liquid can pass, which fluid withdrawal devices (30) are arranged over the perforations (26) in radial directions and joined to the catalyst support (16).

2. Moving catalyst bed reactor according to claim 1, wherein perforations (26) are situated along the intersections of vertical planes with the catalyst support (16).

3. Moving catalyst bed reactor according to claim 1 or 2, wherein each fluid withdrawal device (30) is arranged over the perforation(s) (26) along one intersection.

4. Moving catalyst bed reactor according to claim 2 or 3, wherein the fluid withdrawal devices (30) protrude radially from the downwardly tapering catalyst support (16), and wherein the end walls (34) of the fluid withdrawal devices (30) leave a central chamber (35) having a diameter which is not smaller than the diameter of the central opening (23) of the catalyst support (16).

5. Moving catalyst bed reactor according to claim 4, wherein each fluid withdrawal device (30) has two vertical side walls (40) at least one of which being provided with means (32) for preventing catalyst particles from passing while gas and/or liquid can pass, and a top cover (41), the vertical side walls (40) of adjacent fluid withdrawal devices (30) defining a catalyst passage (45).

6. Moving catalyst bed reactor according to claim 5, wherein the catalyst passages (45) defined between adjacent fluid withdrawal means (30) have a slightly tapering width.

7. Moving catalyst bed reactor according to claim 5 or 6, wherein the top cover (41) of a fluid exchange box (30) consists of two inclined walls (46) and (47).

8. Moving catalyst bed reactor according to anyone of the claims 4-7, wherein the separation device (15) further includes a conical cover (50) closing the upper end of the central chamber (35).

9. Moving catalyst bed reactor according to anyone of the claims 4-8, wherein the separation device (15) further includes a tube (53) extending downwardly into the central chamber (35) to the lowermost parts of the means (32) for preventing catalyst particles from passing.

10. A moving catalyst bed reactor according to anyone of claims 1-9, wherein the reactor (1) further comprises a redistribution device (63) comprising fluid exchange boxes protruding radially from the wall of the vessel, each fluid exchange box having a top cover, vertical side walls at least one of which being provided with a means for preventing catalyst particles from passing while gas and/or liquid are allowed to pass, and an end wall having at least one lower opening, catalyst passages defined by the side walls of adjacent fluid exchange boxes which catalyst passages are closed at their inner ends, a central chamber defined by the end walls of the fluid exchange boxes provided with a top cover, and a fluid distributor arranged at the lower end of the redistribution device, wherein the fluid distributor comprises a distribution tray in the central chamber and distribution plates in the fluid exchange boxes arranged under the lower openings.

## Patentansprüche

1. Katalysatorwanderbett-Reaktor (1), enthaltend einen vertikalen zylindrischen Behälter (5), der an seinem Kopf mit einem Katalysatoreinlaß (7) und einem Reaktandeneinlaß (8) und an seinem Boden mit einem Katalysatorauslaß (10) und einem Austragsstromauslaß (12) versehen ist und eine Trenneinrichtung (15), die im Behälter (5) in der Nähe seines Bodens angeordnet ist, aufweist, wobei die Trenneinrichtung (15) einen sich nach unten hin verjüngenden Katalysatorträger (16) mit einer Außenseite (20), die mit der Wand des Behälters (1) verbunden ist und einer zentralen Öffnung (23), welche direkt mit dem Katalysatorauslaß (10) in Verbindung steht, enthält, und der Katalysatorträger (16) mit Perforierungen (26) und mit Fluidabzugseinrichtungen (30) mit Mitteln (32) zur Verhinderung des Durchgangs von Katalysatorteilchen, wohingegen Gas und/oder Flüssigkeit passieren können, versehen ist, wobei die Fluidabzugseinrichtungen (30) in radialen Richtungen über den Perforierungen (26) angeordnet und mit dem Katalysatorträger (16) verbunden sind.

2. Katalysatorvanderbett-Reaktor nach Anspruch 1, wobei Perforierungen (26) entlang den Schnittstellen von vertikalen Ebenen mit dem Katalysatorträger (16) liegen.

3. Katalysatorwanderbett-Reaktor nach Anspruch 1 oder 2, wobei jede Fluidabzugseinrichtung (30) über der bzw. den Perforierungen (26) entlang einer Schnittstelle angeordnet ist.

4. Katalysatorwanderbett-Reaktor nach Anspruch 2 oder 3, wobei die Fluidabzugseinrichtungen (30) radial aus dem sich nach unten hin verjüngenden Katalysatorträger (16) herausragen und die Stirnwände (34) der Fluidabzugseinrichtungen (30) eine zentrale Kammer (35) mit einem Durchmesser, der nicht kleiner als der Durchmesser der zentralen Öffnung (23) des Katalysatorträgers (16) ist, freilassen.

5. Katalysatorwanderbett-Reaktor nach Anspruch 4, wobei jede Fluidabzugseinrichtung (30) zwei vertikale Seitenwände (40), von denen mindestens eine mit Mitteln (32) zur Verhinderung des Durchgangs von Katalysatorteilchen, wohingegen Gas und/oder Flüssigkeit passieren können, versehen ist, und einen Deckel (41) besitzt, wobei die vertikalen Seitenwände (40) benachbarter Fluidabzugseinrichtungen (30) einen Katalysatordurchgang (45) ausbilden.

6. Katalysatorwanderbett-Reaktor nach Anspruch 5, wobei die zwischen benachbarten Fluidabzugseinrichtungen (30) ausgebildeten Katalysatordurchgänge (45) sich etwas verjüngen.

7. Katalysatorwanderbett-Reaktor nach Anspruch 5 oder 6, wobei der Deckel (41) einer Fluidaustauschbox (30) aus zwei schrägstehenden Wänden (46) und (47) besteht.

8. Katalysatorwanderbett-Reaktor nach einem der Ansprüche 4-7, wobei die Trenneinrichtung (15) weiter eine kegelförmige Abdeckung (50), die das obere Ende der zentralen Kammer (35) verschließt, enthält.

9. Katalysatorwanderbett-Reaktor nach einem der Ansprüche 4-8, wobei die Trenneinrichtung (15) weiter ein Rohr (53) enthält, das sich bis zu den am weitesten unten liegenden Teilen der Mittel (32) zur Verhinderung des Durchgangs von Katalysatorteilchen nach unten in die zentrale Kammer (35) erstreckt.

10. Katalysatorwanderbett-Reaktor nach einem der Ansprüche 1-9, wobei der Reaktor (1) weiter eine Wiederverteilungseinrichtung (63), enthaltend radial aus der Behälterwand herausragende Fluidaustauschboxen, wobei jede Fluidaustauschbox einen Deckel, vertikale Seitenwände, von denen mindestens eine mit einem Mittel zur Verhinderung des Durchgangs von Katalysatorteilchen, wohingegen Gas und/oder Flüssigkeit passieren können, versehen ist, und eine Stirnwand mit mindestens einer unteren Öffnung besitzt, durch die Seitenwände benachbarter Fluidaustauschboxen ausgebildete Katalysatordurchgänge, die an ihren inneren Enden geschlossen sind, eine durch die Stirnwände der Fluidaustauschboxen ausgebildete zentrale Kammer, die mit einem Deckel versehen ist, und einen Fluidverteiler, der am Boden der Wiederverteilungseinrichtung angeordnet ist, enthält, wobei der Fluidverteiler ein Verteilerblech in der zentralen Kammer und unter den unteren Öffnungen angeordnete Verteilerplatten in den Fluidaustauschboxen enthält.

## Revendications

1. Réacteur à lit catalytique mobile (1) comprenant un réservoir cylindrique vertical (5) pourvu à son extrémité supérieure d'une entrée (7) pour le catalyseur et d'une entrée (8) pour le réactif, et, à son extrémité inférieure, d'une sortie (10) pour le catalyseur et d'une sortie (12) pour les effluents, et avec un dispositif de séparation (15) arrangé dans le réservoir (5) près de son extrémité inférieure, lequel dispositif de séparation (15) comprend un support de catalyseur (16) de forme rétrécissant vers le bas ayant un bord externe (20) qui est joint à la paroi du réservoir (5) et un orifice central (23) qui communique directement avec la sortie (10) pour le catalyseur, le support de catalyseur (16) étant pourvu de perforations (26) et de dispositifs d'extraction de fluide (30) ayant des moyens (32) pour empêcher les particules de catalyseur de passer tout en laissant passer du gaz et/ou du liquide, lesquels dispositifs d'extraction de fluide (30) étant arrangés par-dessus les perforations (26) dans des directions radiales et étant joints au support de catalyseur (16).

2. Réacteur à lit catalytique mobile selon la revendication 1, dans lequel les perforations (26) sont situées le long des intersections de plans verticaux avec le support de catalyseur (16).

3. Réacteur à lit catalytique mobile selon la revendication 1 ou 2, dans lequel chaque dispositif d'extraction de fluide (30) est arrangé par-dessus la (les) perforation(s) (26) le long d'une intersection.

4. Réacteur à lit catalytique mobile selon la revendication 2 ou 3, dans lequel les dispositifs d'extraction de fluide (30) font saillie radialement depuis le support de catalyseur (16) de forme rétrécissant vers le bas, et dans lequel les parois d'extrémité (34) des dispositifs d'extraction de fluide (30) laissent une chambre centrale (35) ayant un diamètre qui n'est pas inférieur au diamètre de l'orifice central (23) du support de catalyseur (16).

5. Réacteur à lit catalytique mobile selon la revendication 4, dans lequel chaque dispositif d'extraction de fluide (30) a deux parois latérales verticales (40) dont au moins une est pourvue de moyens (32) pour empêcher les particules de catalyseur de passer tout en laissant passer du gaz et/ou du liquide, et un couvercle supérieur (41), les parois latérales verticales (40) de dispositifs d'extraction de fluide adjacents (30) définissant un passage (45) pour le catalyseur.

6. Réacteur à lit catalytique mobile selon la revendication 5, dans lequel les passages (45) pour le catalyseur définis entre les moyens d'extraction de fluide adjacents (30) ont une largeur rétrécissant légèrement.

7. Réacteur à lit catalytique mobile selon la revendication 5 ou 6, dans lequel le couvercle supérieur (41) d'une boîte d'échange fluidique (30) est constitué de deux parois inclinées (46) et (47).

8. Réacteur à lit catalytique mobile selon l'une quelconque des revendications 4 à 7, dans lequel le dispositif de séparation (15) comporte en outre un couvercle conique (50) fermant l'extrémité supérieure de la chambre centrale (35).

9. Réacteur à lit catalytique mobile selon l'une quelconque des revendications 4 à 8, dans lequel le dispositif de séparation (15) comporte en outre un tube (53) s'étendant vers le bas dans la chambre centrale (35) jusqu'aux parties les plus basses des moyens (32) pour empêcher les particules de catalyseur de passer.

10. Réacteur à lit catalytique mobile selon l'une quelconque des revendications 1 à 9, dans lequel le réacteur (1) comprend en outre un dispositif de redistribution (63) comprenant des boîtes d'échange fluidique faisant saillie radialement depuis la paroi du réservoir, chaque boîte d'échange fluidique ayant un couvercle supérieur, des parois latérales verticales dont au moins une est pourvue d'un moyen pour empêcher les particules de catalyseur de passer tout en laissant passer du gaz et/ou du liquide, et une paroi d'extrémité ayant au moins un orifice inférieur, des passages pour le catalyseur définis par les parois latérales des boîtes d'échange fluidique adjacentes, lesquels passages pour le catalyseur étant fermés à leur extrémité interne, une chambre centrale définie par les parois d'extrémité des boîtes d'échange fluidique pourvues d'un couvercle supérieur, et un distribiteur de fluide arrangé à l'extrémité inférieure du dispositif de redistribution, dans lequel le distributeur de fluide comprend un bac de distribution dans la chambre centrale et des plateaux de distribution dans les boîtes d'échange fluidique arrangés sous les orifices inférieurs.
